# EUROPÄISCHE PATENTSCHRIFT

(11) **EP 0 785 059 B1**
(45) Veröffentlichungstag und Bekanntmachung des Hinweises auf die Patenterteilung: **08.03.2000**
(21) Anmeldenummer: 97250003.7
(22) Anmeldetag: 09.01.1997
(51) Int. Cl.: B29C 45/50

(54) **Plastifizier- und Einspritzeinheit einer Kunstoffspritzgiessmaschine**
Plasticising and injection unit of a plastic injection moulding unit
Unité de plastification et d'injection d'une machine à mouler par injection des matières plastiques

(30) Priorität: 18.01.1996 DE 19603012
(43) Veröffentlichungstag der Anmeldung: 23.07.1997
(73) Patentinhaber: MANNESMANN Aktiengesellschaft, 40213 Düsseldorf (DE)
(72) Erfinder: Würl, Ernst, 91798 Höttingen (DE); Schreiner, Helmut, Dipl.-Ing., 90411 Nürnberg (DE)
(74) Vertreter: Meissner, Peter E., Dipl.-Ing.

(56) Entgegenhaltungen:
- DD-A- 135 876
- DE-A- 3 937 099
- PATENT ABSTRACTS OF JAPAN vol. 3, no. 109 (C-58), 12.September 1979 & JP 54 088963 A (DAIKIN KOGYO K.K.), 14.Juli 1979,

## Beschreibung

Die Erfindung betrifft eine Plastifizier- und Einspritzeinheit einer Kunststoffspritzgießmaschine mit einer in einem Spritzzylinder angeordneten Schnecke, die durch einen alleinigen Elektromotor von einem mit der Antriebswelle der Schnecke verbundenen mechanischen Rotationsantrieb sowie einem Linearantrieb bewegt wird, der aus einer mit dem Elektromotor verbundenen Druckmittelpumpe und einer von dieser bewegten Kolbenzylindereinheit besteht.

Aus DD-A-135 876 ist eine Antriebsanordnung insbesondere für Spritzgießmaschinen bekannt, bei der ein drehzahlvariabler Elektromotor eingesetzt wird, der direkt über eine Schaltkupplung oder die Schaltkupplungen zusätzlich kraftübertragende Maschinenelemente die Plastifizierschnecke antreibt und gleichzeitig an die Antriebswelle des Elektromotors Hydraulikpumpen zum Antrieb der Druckstromverbraucher angeflanscht sind.

Weiterhin ist aus der DE-A-39 37 099 eine Kunststoffspritzgießmaschine bekannt, bei der ein gemeinsamer elektrischer Antriebsmotor vorgesehen ist, von welchem während des Plastifizierens des Kunststoffgranulats die Schnecke in Rotation versetzt wird und danach von diesem Antriebsmotor die Einspritzeinheit um den Spritzhub in Richtung der Austragsöffnung gepreßt wird. Der Rotationsantrieb und der Einspritzeintrieb sind über ein Wechselgetriebe an einem, beiden gemeinsamen Antriebsmotor angeschlossen. Um die Linearbewegung nach der Rotationsbewegung durchführen zu können, findet eine im Getriebe vorgesehene Kupplung Verwendung, die die Druckmittelpumpe vom Antriebsmotor abkuppelt.

Bei den bekanntgewordenen Kunststoffspritzgießmaschinen wird nachteiligerweise bei Betrieb des Antriebsmotors das Getriebe teilweise weiter betrieben. Darüber hinaus ist die in einem offenen Hydraulikkreis vorgesehene Pumpe nur in einer Richtung antreibbar.

Die Erfindung hat sich das Ziel gesetzt, für eine Kunststoffspritzgießmaschine einen einfachen Linear- und Rotationsantrieb der Schnecke zu schaffen, mit dem ein lärmarmer und energiesparender Betrieb möglich ist

Die Erfindung erreicht dieses Ziel durch die kennzeichnenden Merkmale des Anspruchs 1 und 7.

Zweckmäßige Weiterbildungen der Erfindung sind in den abhängigen Ansprüchen beschrieben.

Die Erfindung weist für die lineare und die rotatorische Bewegung einen gemeinsamen Antriebsmotor, vorzugsweise einen servoelektrischen Motor auf. Dieser Antriebsmotor ist mindestens für die Linearbewegung an eine förderrichtungsumkehrbare Hydraulikpumpe gekoppelt, die in einem geschlossenen Hydraulikkreis förderrichtungsabhängig die Linearbewegung der Schnecke über Gleichgangzylinder durchführt.

Der Rotationsantrieb wird über ein Getriebe zur Anpassung des Antriebsmomentes an das geforderte Antriebsmoment auf die Schnecke geleitet. Die gleichzeitig zum Rotationsantrieb erforderliche passive Linearkraft an der Schnecke, die einen Staudruck auf die geförderte Masse ausübt, erzeugt am Gleichgangzylinder des Linearantriebs einen Ölstrom zur Hydraulikpumpe, die in dieser Phase als Ölmotor arbeitet und das entstehende Drehmoment, durch starre Kopplung der Pumpe mit dem Motor, als Antriebsmoment auf diesen geleitet wird. Durch diese Art der Kopplung wird in einfacher Weise Leistung zurückgewonnen. Die Pumpe wird quasi als Bremse im Linearkreis eingesetzt und die Bremsenergie wird wieder für den Rotationsantrieb mitverwendet.

Die Staudruckregelung und als Folge die Größe der Bremsenergie erfolgt durch Veränderung der Pumpen- bzw. Motorschluckmenge, die einem separaten Regelkreis unterliegt. Der Linearantrieb der Schnecke wird über Gleichgangzylinder im geschlossenen Kreis mit Pumpen, die mit einer schwenkwinkelabhängigen Förderrichtungsumkehr ausgestattet sein können, durchgeführt.

Für den aktiven Linearbetrieb, der immer eine Pumpendrehrichtung entgegen des Rotationsantriebs bedeutet, wird entsprechend der Bewegungsrichtung die Förderrichtung der Pumpe verstellt. Die Regelung von Druck und Menge der Pumpe kann sowohl durch Schwenkwinkelbeeinflussung der Pumpe, als auch durch Drehzahlund Antriebsmomentenbeeinflussung durch den Antriebsmotor erfolgen.

Damit beim aktiven Linearantrieb keine Rückwärtsdrehung der Schnecke erfolgt, ist der Antriebsstrang des Rotationsantriebs mechanisch trennbar. Diese Trennung erfolgt bei Einsatz eines Freilaufs automatisch bei der entsprechenden Drehrichtung oder mittels Schaltkupplung.

Der Staudruck zwischen Schnecke und Spritzzyinder wird direkt auf den Gleichlaufzylinder und damit auf den geschlossenen Hydraulikkreis übertragen. Durch Einsatz einer Pumpe, bei der die Förderströmrichtung des hydraulischen Mediums beliebig einstellbar ist, kann mit einfachen Mitteln unabhängig von der Drehrichtung des Elektromotors der Staudruck der Kunststoffmasse feinfühlig eingestellt werden. Im Bedarfsfall, etwa am Ende des Spritzzyklus kann durch Rücknahme des Druckes im Hydrauliksystem eine Kompressionsentlastung der Kunststoffmasse durchgeführt werden, so daß ein überflüssiges Ausfließen der Kunststoffmasse aus der Düse unterbleibt.

Der mechanische Antrieb für die Rotation, wie auch der hydraulische Antrieb für die Linearbewegung ist in seinem Aufbau einfach, er besitzt nur wenige Elemente und ist durch einfache Kapselung der Aggregate gegen Geräusche leicht abschirmbar. Darüber hinaus ermöglicht diese Ausführungsform eine einfache Kapselung der Aggregate gegen Leckage und Geräusche.

Ein Beispiel der Erfindung ist in der beiliegenden Zeichnung dargelegt worden. Dabei zeigen
- Figur 1: Das Schema einer Kunststoffspritzgießmaschine mit zentraler Kolbenzylindereinheit.
- Figur 2: Das Schema einer Kunststoffspritzgießmaschine mit zwei parallel geführten Hydraulikzylindereinheiten.

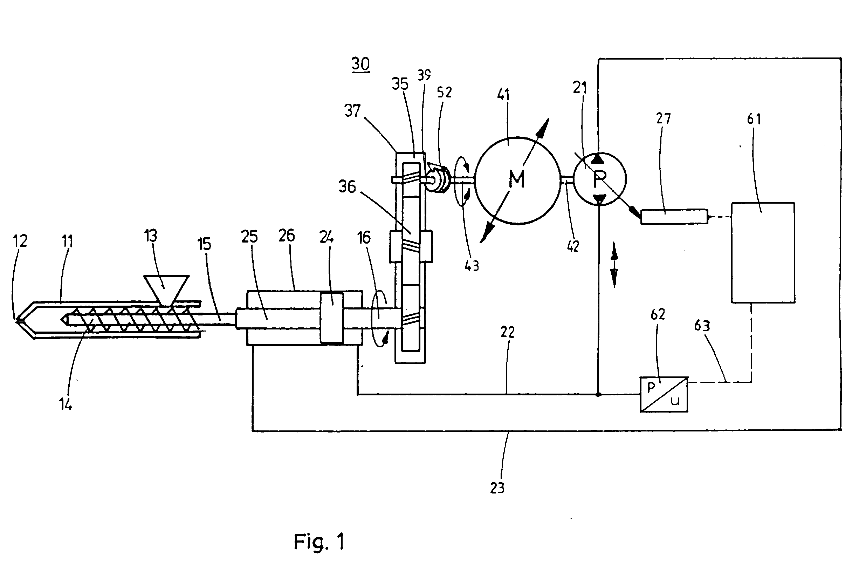

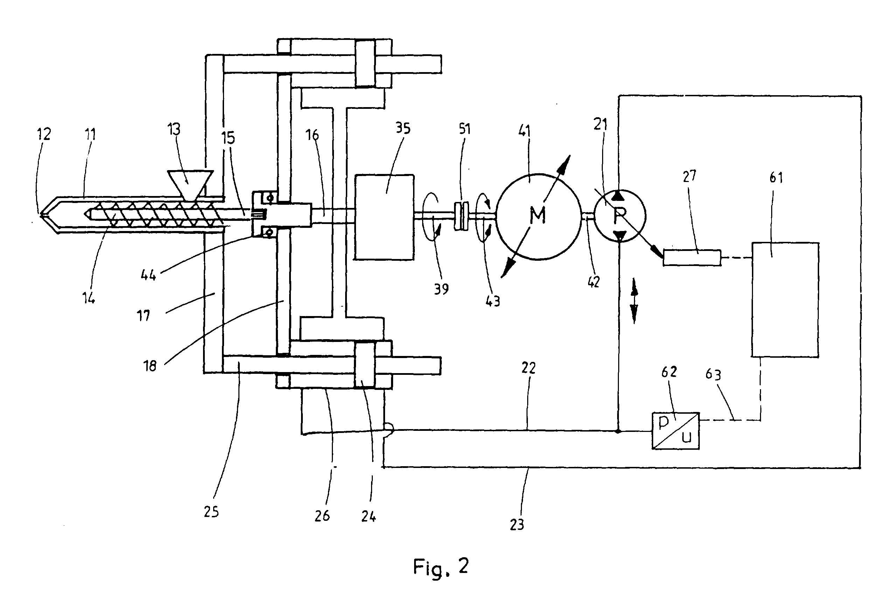

Die Figuren 1 und 2 zeigen einen Spritzzylinder 11 mit einer Austragsöffnung 12 und einem Aufnahmebehälter 13 sowie einer konzentrisch angeordneten Schnecke 14. Die Schnecke 14 ist über eine schneckenseitige Antriebswelle 15 mit einer Kolbenstange 25 einer einen Kolben 24 und einem Zylinder 26 aufweisenden Gleichgangeinheit verbunden. Motorseitig ist die Kolbenstange 25 mit einer Antriebswelle 16 verbunden auf die über ein Getriebe 35 ein Motor 41 wirkt. Das Getriebe 35 besitzt dabei eine Eingangswelle 39, welches durch eine Kupplungseinrichtung 51 bzw. ein Freilauf 52 von der Antriebswelle des Motors 43 trennbar ist.

Der elektrische Antriebsmotor 41, der als Servomotor ausgebildet ist, besitzt eine zweite Ausgangswelle 42, die mit einer Druckmittelpumpe 21 verbunden ist.

Die Druckmittelpumpe 21 ist über eine erste hydraulische Leitung 22 und eine zweite hydraulische Leitung 23 mit dem Gleichgangzylinder 26 verbunden. Durch Elemente 27 ist die Förderströmrichtung der Pumpe verstellbar. Die Verstellelemente 27 sind mit einer Regeleinrichtung 61 verbunden, die über eine Meßleitung 63 mit einem Drucksensor 62, der an die hydraulische Leitung 22 angeschlossen ist, verbunden.

In der Figur 1 weist das Getriebe 35 ein Gehäuse 37 auf, in dem Getrieberäder 36 angeordnet sind.

In der Figur 2 sind zwei Gleichgangzylinder 26 über ein Gegenjoch 18 verbunden, deren Kolbenstange 25 über ein Joch 17 miteinander verbunden ist. Weiterhin ist ein Drucklager 44 vorgesehen, das zwischen dem Gegenjoch 18 und der schneckenseitigen Antriebswelle 15 angeordnet ist.

## Patentansprüche

1. Plastifizier- und Einspritzeinheit einer Kunststoffspritzgießmaschine mit einer in einem Spritzzylinder (11) angeordneten Schnecke (14), die durch einen alleinigen Elektromotoren (41) von einem mit der Antriebswelle (15) der Schnecke in Verbindung stehenden mechanischen Rotationsantrieb sowie einem Linearantrieb bewegt wird, der aus einer mit dem Elektromotor (41) verbundenen Druckmittelpumpe (21) und einer von dieser bewegten Kolbenzylindereinheit (24,25,26) besteht,
dadurch gekennzeichnet,
daß die Druckmittelpumpe (21) auch als Druckmittelmotor arbeiten kann und Elemente zur Veränderung ihrer Pumpen- bzw. Motorschluckmenge besitzt, die an eine Regeleinrichtung (61) angeschlossen sind,
daß die Kolbenzylindereinheit (24 - 26) des Linearantriebs als Gleichgangzylinder ausgebildet ist, und
daß Hydraulikleitungen (22, 23) vorgesehen sind, die die Ein- und Ausgänge der Gleichgangzylinder (26) und der Druckmittelpumpe (21) in einem geschlossenen Hydraulikkreis unmittelbar miteinander verbinden.

2. Plastifizier- und Einspritzeinheit einer Kunststoffspritzgießmaschine nach Anspruch 1
dadurch gekennzeichnet,
daß der Elektromotor (41) ein Servomotor ist.

3. Plastifizier- und Einspritzeinheit einer Kunststoffspritzgießmaschine nach Anspruch 1
dadurch gekennzeichnet,
daß die Druckmittelpumpe (21) in der Weise aufgebaut ist, daß bei gleicher Drehrichtung auch eine Umkehr der Förderstromrichtung durchführbar ist.

4. Plastifizier- und Einspritzeinheit einer Kunststoffspritzgießmaschine nach Anspruch 1
dadurch gekennzeichnet,
daß die Druckmittelpumpe (21) in der Weise aufgebaut ist, daß sie als Motor arbeiten kann, der Druckunterschiede in Form von Drehmomenten zum mit dem mechanischen Rotationsantrieb (35) verbundenen Elektromotor (41) zurückleitet.

5. Plastifizier- und Einspritzeinheit einer Kunststoffspritzgießmaschine nach Anspruch 4
dadurch gekennzeichnet,
daß zwischen dem Elektromotor (41) und dem mechanischen Rotationsantrieb (35) eine Kupplungseinrichtung, beispielsweise eine Schaltkupplung (52) oder ein Freilauf (51) angeordnet ist.

6. Plastifizier- und Einspritzeinheit einer Kunststoffspritzgießmaschine nach einem der vorgenannten Ansprüche
dadurch gekennzeichnet,
daß mindestens zwei Kolbenzylindereinheiten (24, 26) über ein Joch (17) und über ein Gegenjoch (18) mit dem Spritzzylinder (11) sowie der schneckenseitigen Antriebswelle (15) verbunden sind und daß die Antriebswelle über Axiallager (44) abgestützt wird.

7. Plastifizier- und Einspritzeinheit einer Kunststoffspritzgießmaschine nach Anspruch 1,
dadurch gekennzeichnet,
daß die Regeleinrichtung (61) mit einem in der Leitung (22) vorgesehenen Druckmittelsensor (62) über eine Meßleitung (63) verbunden ist.

8. Verfahren zum Betreiben einer Plastifizier- und Einspritzeinheit einer Kunststoffspritzgießmaschine nach einem der Ansprüche 1 bis 7,
dadurch gekennzeichnet,
daß unter Beibehaltung der Drehrichtung des Elektormotors (41) zur Ermöglichung der Bewegung des Linearantriebes in beide Richtungen die Förderstromrichtung der Ölhydraulik innerhalb der Druckmittelpumpe (21) umkehrbar ist und
die Drehzahl- und/oder Drehmomentregelung durch den Elektromotor (41) erfolgt.

9. Verfahren nach Anspruch 8,
dadurch gekennzeichnet,
daß bei einer Betriebsweise, in der die Druckmittelpumpe (21) als Motor arbeitet, der Druck des verdrängten Hydrauliköles des Linearantriebes in vorgebbarer Weise in Abhängigkeit des Staudruckes vor der Schnecke (14) eingestellt wird.

10. Verfahren nach Anspruch 8 oder 9,
dadurch gekennzeichnet,
daß die Schluckmenge der als Druckmittelmotor arbeitenden Druckmittelpumpe (21) so eingestellt wird, daß unter exakter Einhaltung des Druckes der Ölhydraulik in Abhängigkeit des Staudruckes der Kunststoffmasse in der Vorkammer der Schnecke (14) die überschüssige Bremsenergie dem Elektromotor (41) zugeführt wird.

11. Verfahren nach Anspruch 8,
dadurch gekennzeichnet,
daß die Förderrichtung der als Druckmittelmotor arbeitenden Druckmittelpumpe (21) so eingestellt wird, daß der hydraulische Linearantrieb eine Kompressionsentlastung des Stauraumes der Schnecke (14) bewirkt.

## Claims

1. A plasticising and injecting unit for a plastics injection moulding machine, having a screw (14) arranged in an injection cylinder (11), which screw (14) is moved by a single electric motor (41) via a mechanical rotary drive connected with the drive shaft (15) of the screw and a linear drive, which consists of a hydraulic pump (21) connected with the electric motor (41) and a piston/cylinder unit (24, 25, 26) moved thereby,
characterised in that
the hydraulic pump (21) may also operate as a hydraulic motor and comprises elements for changing its pump or motor capacity which are connected to a control means (61),
in that the piston cylinder/unit (24 - 26) of the linear drive takes the form of a constant running cylinder, and in that hydraulic lines (22, 23) are provided, which connect the in- and outlets of the constant running cylinders (26) and the hydraulic pump (21) directly with each other in a closed hydraulic circuit.

2. A plasticising and injecting unit for a plastics injection moulding machine according to claim 1,
characterised in that
the electric motor (41) is a servo motor.

3. A plasticising and injecting unit for a plastics injection moulding machine according to claim 1,
characterised in that
the hydraulic pump (21) is constructed in such a way that the direction of throughput may be reversed while the direction of rotation remains the same.

4. A plasticising and injecting unit for a plastics injection moulding machine according to claim 1,
characterised in that
the hydraulic pump (21) is constructed in such a way that it may operate as a motor, which conveys pressure differences back to the electric motor (41) connected to the mechanical rotary drive (35) in the form of torque.

5. A plasticising and injecting unit for a plastics injection moulding machine according to claim 4,
characterised in that
a coupling means, for example a clutch (52) or a freewheel (51), is arranged between the electric motor (41) and the mechanical rotary drive (35).

6. A plasticising and injecting unit for a plastics injection moulding machine according to any one of the preceding claims,
characterised in that
at least two piston/cylinder units (24, 26) are connected via a yoke (17) and a counter-yoke (18) to the injection cylinder (11) and the drive shaft (15) on the screw side and in that the drive shaft is supported by means of journal bearings (44).

7. A plasticising and injecting unit for a plastics injection moulding machine according to claim 1,
characterised in that
the control means (61) is connected via a measuring line (63) to a hydraulic sensor (62) provided in the line (22).

8. A method of operating a plasticising and injecting unit for a plastics injection moulding machine according to any one of claims 1 to 7,
characterised in that,
while maintaining the direction of rotation of the electric motor (41), to enable movement of the linear drive in both directions the direction of throughput of the hydraulic fluid inside the hydraulic pump (21) may be reversed and speed and/or torque control is effected by the electric motor (41).

9. A method according to claim 8,
characterised in that
in an operating mode in which the hydraulic pump (21) operates as a motor, the pressure of the compressed hydraulic fluid of the linear drive is adjusted in a predeterminable manner as a function of the back pressure upstream of the screw (14).

10. A method according to claim 8 or claim 9,
characterised in that
the capacity of the hydraulic pump (21) operating as a hydraulic motor is adjusted in such a way that, while maintaining precisely the pressure of the hydraulic fluid as a function of the back pressure of the plastics composition in the ante-chamber of the screw (14), the excess braking energy may be fed to the electric motor (41) .

11. A method according to claim 8,
characterised in that
the conveying direction of the hydraulic pump (21) operating as a hydraulic motor is adjusted in such a way that the hydraulic linear drive effects decompression of the space in front of the screw (14).

## Revendications

1. Unité d'injection et de plastification d'une machine de coulée par injection de matière synthétique, comportant une vis sans fin (14) agencée dans un cylindre d'injection (11), qui est déplacée par un moteur électrique unique (41) par un entraînement en rotation mécanique relié à l'arbre d'entraînement (15) de la vis sans fin, ainsi qu'un entraînement linéaire, qui est constitué d'une pompe (21) à agent de pression reliée au moteur électrique (41) et d'un vérin (24,25,26) déplacé par celle-ci, caractérisée en ce que la pompe à agent de pression (21) peut également travailler comme moteur à agent de pression et possède des éléments pour modifier son débit de pompe ou de moteur, qui sont raccordés à un dispositif de régulation (61), en ce que le vérin (24-26) de l'entraînement linéaire est réalisé comme vérin à action uniforme, et en ce que des conduits hydrauliques (22,23) sont prévus qui relient directement ensemble, dans un circuit hydraulique fermé, les entrées et sorties des vérins à action uniforme (26) et de la pompe à agent de pression (21).

2. Unité d'injection et de plastification d'une machine de coulée par injection de matière synthétique selon la revendication 1, caractérisée en ce que le moteur électrique (41) est un servomoteur.

3. Unité d'injection et de plastification d'une machine de coulée par injection de matière synthétique selon la revendication 1, caractérisée en ce que la pompe à agent de pression (21) est réalisée de façon telle que, pour un même sens de rotation, une inversion du sens du courant d'alimentation peut être également effectuée.

4. Unité d'injection et de plastification d'une machine de coulée par injection de matière synthétique selon la revendication 1,
caractérisée en ce que la pompe à agent de pression (21) est réalisée de façon qu'elle puisse travailler comme moteur, qui ramène des différences de pression sous forme de couples au moteur électrique (41) relié à l'entraînement en rotation mécanique (35).

5. Unité d'injection et de plastification d'une machine de coulée par injection de matière synthétique selon la revendication 4,
caractérisée en ce que, entre le moteur électrique (41) et l'entraînement en rotation mécanique (35), il est agencé un dispositif de couplage, par exemple un embrayage (52) ou une roue libre (51).

6. Unité d'injection et de plastification d'une machine de coulée par injection de matière synthétique selon une des revendications précitées,
caractérisée en ce qu'au moins deux vérins (24,26) sont reliés, par l'intermédiaire d'un longeron (17) et par l'intermédiaire d'un contre-longeron (18), au cylindre d'injection (11) ainsi qu'à l'arbre d'entraînement (15) du côté de la vis sans fin, et en ce que l'arbre d'entraînement est supporté par des paliers axiaux (44).

7. Unité d'injection et de plastification d'une machine de coulée par injection de matière synthétique selon la revendication 1,
caractérisée en ce que le dispositif de régulation (61) est relié à un capteur d'agent de pression (62), prévu sur le conduit (22), par l'intermédiaire d'une ligne de mesure (63).

8. Procédé pour mettre en oeuvre une unité d'injection et de plastification d'une machine de coulée par injection de matière synthétique selon une des revendications 1 à 7,
caractérisé en ce que, en maintenant le sens de rotation du moteur électrique (41) pour permettre le déplacement de l'entraînement linaire dans les deux sens, le sens du courant d'alimentation de l'huile hydraulique à l'intérieur de la pompe à agent de pression (21) peut être inversé et la régulation de la vitesse de rotation et/ou du couple est effectuée par le moteur électrique (41).

9. Procédé selon la revendication 8,
caractérisé en ce que, dans le cas d'un fonctionnement dans lequel la pompe à agent de pression (21) travaille comme moteur, la pression de l'huile hydraulique refoulée de l'entraînement linéaire est réglée d'une façon pouvant être prédéfinie de façon dépendant de l'accumulation de pression avant la vis sans fin (14).

10. Procédé selon la revendication 8 ou 9,
caractérisé en ce que le débit de la pompe à agent de pression (21) travaillant comme moteur à agent de pression est réglé de sorte que, en maintenant exactement la pression de l'huile hydraulique de façon dépendant de l'accumulation de pression de la masse de matière synthétique dans la pré-chambre de la vis sans fin (14), l'énergie de freinage en excès est amenée au moteur électrique (41).

11. Procédé selon la revendication 8,
caractérisé en ce que le sens d'alimentation de la pompe à agent de pression (21) travaillant comme moteur à agent de pression est réglé de sorte que l'entraînement linéaire hydraulique permet une décharge de compression de l'espace d'accumulation de la vis sans fin (14).
